# EUROPEAN PATENT SPECIFICATION

(11) **EP 1 808 988 B1**
(45) Date of publication and mention of the grant of the patent: **11.06.2008**
(21) Application number: 06100255.6
(22) Date of filing: 11.01.2006
(51) Int. Cl.: H04L 12/58, H04L 12/26

(54) **Script for sending test messages**
Script zum Übertragen von Testnachrichten
Script pour envoyer des messages de test

(43) Date of publication of application: 18.07.2007
(73) Proprietor: Research In Motion Limited, Waterloo, Ontario N2L 3W8 (CA)
(72) Inventor: Bilkhu, Baljeet, N2R 1L2, Kitchener (CA); Smith, Andrew, N2T 2S6, Waterloo (CA); Wong, Tsz-Kin Gary, N2J 4T3, Waterloo (CA)
(74) Representative: Rickard, David John

(56) References cited:
- EP-A- 1 569 481
- GB-A- 2 346 774
- US-A- 5 841 982

## Description

The following is directed in general to communication systems, and more particularly to a method of automatically sending multiple electronic mail (email) messages from a communications server to a mobile communication device and verifying correct receipt of the messages within the mobile communication device.

Mobile communication devices (hereinafter "handheld devices") are becoming increasingly popular for business and personal use due to a relatively recent increase in the number of services and features that the devices and mobile infrastructure support. Handheld devices, sometimes referred to as mobile stations, are essentially portable computers having wireless capability, and come in various forms. These include Personal Digital Assistants (PDAs), cellular phones and smart phones equipped with receivers and transmitters for communicating over a wireless network.

In order to facilitate communications and manage delivery of services to users of handheld devices within an enterprise, it is known to use one or more enterprise servers. These servers provide functionality and components that monitor services (such as provided by additional attachment servers, web servers, etc.) as well as process, route, compress and encrypt data for transmission to and from handheld devices connected to the wireless network.

It is known that certain email messages sent from the enterprise server to a handheld device may cause the server to "crash". Accordingly, it is desirable to test all varieties of email messages that may cause the server to crash, before the server is deployed. However, there are many different possible combinations of email messages, any one of which may cause the server to crash. In order to test even a small subset of all possible messages, the messages must be manually composed at a server mail client and then sent to the handheld device. This is a very time consuming task for testers. Consequently, many enterprise servers are not fully tested before deployment to ensure that the email functionality is operating correctly.

GB2346774 describes a test tool for a messaging system in which a number of test cases are defined and used for testing the messaging system. The messages are generated at a user interface component and transmitted to a recipient. Receipt of the message at a recipient post office is checked and records are generated relating to success or failure to transmit or to receive the messages.

### General

There is set forth herein, a system and method of testing communications between at least one enterprise server and at least one handheld mobile communication device, the method preferably comprising automatically sending a plurality of test messages from the enterprise server to the handheld mobile communication device.

Also set forth is a method for verifying correct receipt of the test messages and reporting the verification results.

In a first aspect of the invention, a communication system is provided having an enterprise server for interacting with an e-mail server for facilitating communications and delivery of services to mobile communication devices associated with users, wherein said enterprise server is arranged to execute an automated script associated with a mail account of a user on the e-mail server for testing said communications by: copying test messages from a database to a mail file of the user within the e-mail server; and automatically sending a plurality of said test email messages to at least one of said mobile communication devices associated with at least one user.

In a second aspect of the invention, there is provided method of testing communications in a system comprising an enterprise server interacting with an e-mail server, for facilitating communications and delivery of services to at least one mobile communication device), the method comprising the steps at the enterprise server of: executing an automated script associated with a mail account of a user on the e-mail server); copying test messages from a database to a mail file of the user within the e-mail server; and automatically sending a plurality of said test email messages to said at least one mobile communication device.

In a third aspect of the invention, there is provided an enterprise server for interacting with an e-mail server for facilitating communications and delivery of services to mobile communication devices associated with users in a communication system, wherein said enterprise server has an automated script installed thereon, said automated script being associated with a mail account of a user on the e-mail server, said automated script being configured to test said communications by copying test messages from a database to a mail file of the user within the e-mail server and automatically sending a plurality of test said email messages to at least one of said mobile communication devices associated with at least one use.

### Brief Description of the Drawings

A detailed description of the preferred embodiment is set forth in detail below, with reference to the following drawings, in which:

Figure 1 is a block diagram showing a typical enterprise server architecture with remote components.

Figure 2 is a diagram showing the method of the preferred embodiment.

Figure 3 is a flowchart showing execution of an automated script according to the preferred embodiment.

Figure 4, comprising Figures 4A - 4L, shows an exemplary script for implementing the method of the preferred embodiment.

Figure 5 is a flowchart showing execution of a handheld device process according to the preferred embodiment.

### Description of Preferred Embodiments

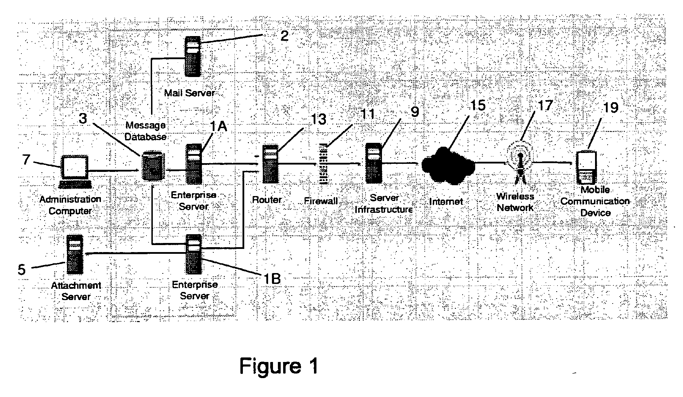

With reference to Figure 1, a typical enterprise server configuration is shown with enterprise servers 1A and mail server 2 connected to a message database 3. Enterprise server 1 B is also connected to an attachment server 5. An administration computer 7 executes administration software for managing operation of the multiple servers 1 A and 1 B. The enterprise servers 1 A and 1 B connect to a server infrastructure 9, through firewall 11, using a router 13. The server infrastructure 9 is connected to the Internet 15 which, in turn, communicates with a plurality of hand-held devices, such as device 19, via wireless network 17. Operation of the architecture shown in Figure 1 would be well known to a person of ordinary skill in the art.

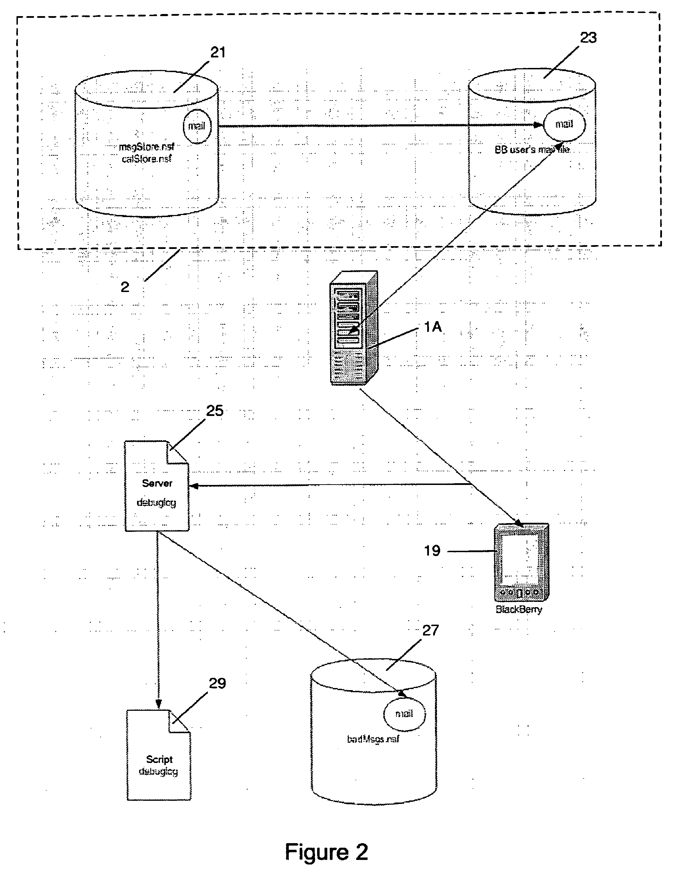

As discussed in greater detail below, in order to test email functionality an administrator interacts with an enterprise server (e.g. server 1A) to execute a script from an email client associated with a mail account on mail server 2 (e.g. IBM Lotus Domino, Microsoft Exchange, etc.) that the enterprise server 1 A interacts with to retrieve messages and other data, as discussed in greater detail in connection with Figure 2. The script inputs the SMTP addresses of multiple users of handheld devices 19, in response to which messages are automatically sent to the handheld devices 19. This drastically cuts down on the amount of time required to test messaging. The administrator is automatically sent a test report once the emails have been sent to the device 19 and checked for error-free delivery, thereby relieving the administrator from having to manually examine each message on the device 19 to ensure proper delivery. The report can be delivered either after all of the messages from the script have been received, or in response to a specific message sent from the client messaging script.

According to the preferred embodiment, the script also automates attachment processing and regression testing. Regression testing allows the administrator to copy calendar entries from the handheld user's mail file to the device 19 and/or use calendar entry templates to generate non-recurring calendar entries in the handheld user's mail file.

At the end of the test, the script generates one or more text files that log the results of the test. If the script detects any errors during its execution, it copies the failed mail messages to a database. Manual testing may then be performed on the failed mail messages/attachments to ensure that they are, in fact, the cause of errors on the enterprise server. A summary of the results may be sent to the administrator via email once the test is complete. The email has the detailed text logs attached to it for easy viewing. The administrators' email addresses may be specified in an INI file (configuration file taken as input by the script) or some other form of user input.

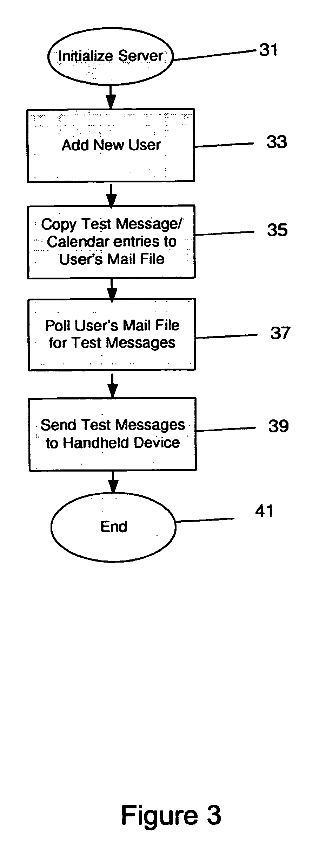

Operation of the script is described with reference to Figure 2 in conjunction with Figure 1, and the flowchart of Figure 3, whereby a fictional or 'dummy' handheld user is created on the enterprise server 1A, email messages are sent to the user's handheld device 19, and the results of sending those emails are reported back to the administrator.

First, the administrator prepares the server 1 A for use as an enterprise server (step 31), and ensures that the automated script is installed. The fictional user is then added to the server 1 A as a new user (step 33), in the enterprise server's email directory. The receipient SMTP addresses may be specified in an INI file and read by the script upon initialization. Alternatively, the script may prompt the administrator to input the addresses manually. In any event, the method of input is not important to an understanding of the system and method set forth herein.

Next, the script is executed within the enterprise server 1 A, whereupon test message/calendar entries are copied (step 35) from a database 21 (mdgStore.nsf/calStore.nsf) to the user's mail file 23 within the mail server 2. The enterprise server 1 A then polls the user's mail file for new messages (step 37), resulting in a plurality of test email messages being sent to handheld device 17 via the wireless network 17 (step 39).

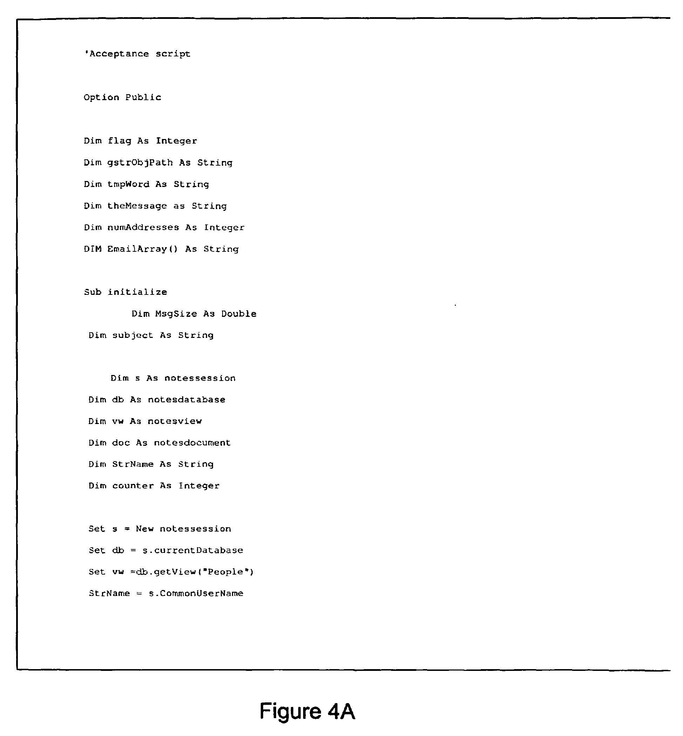

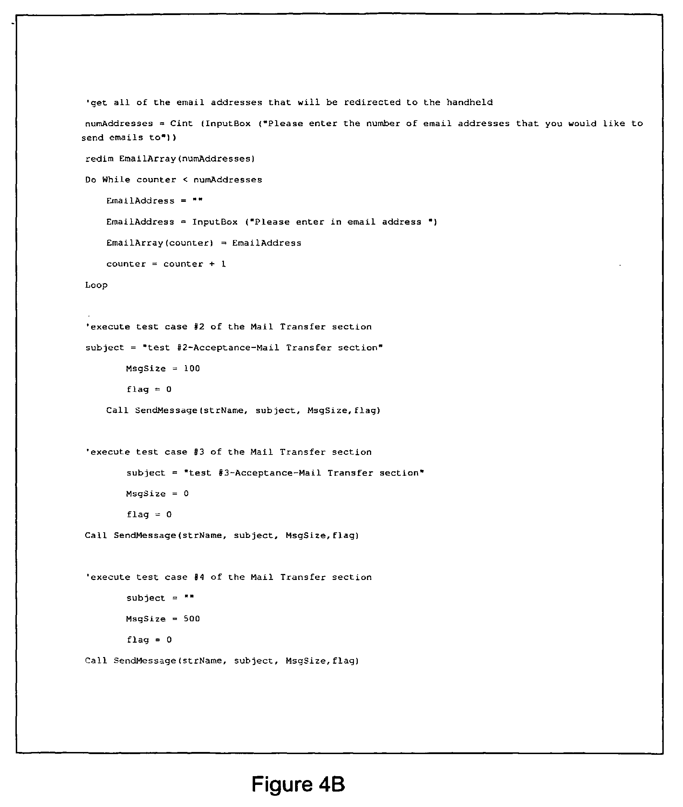

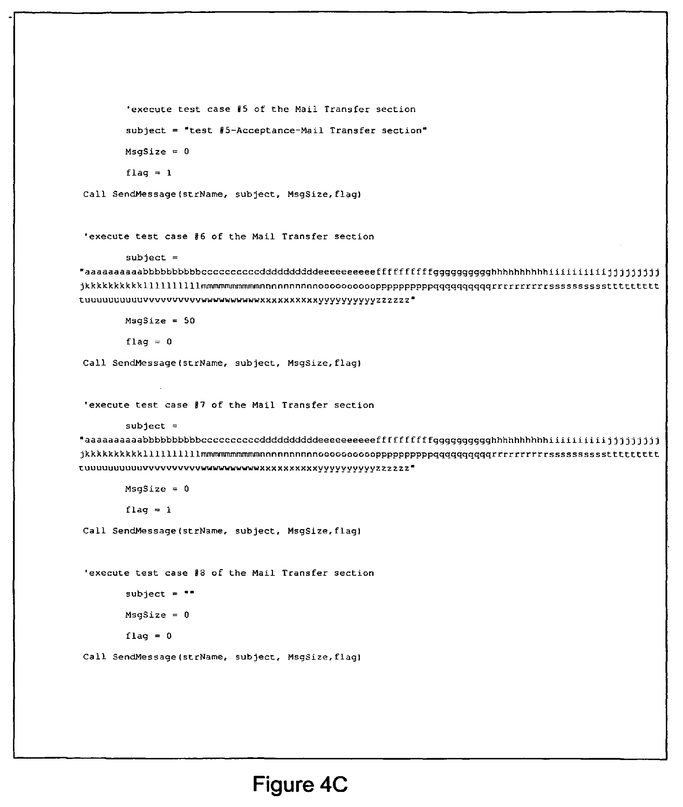

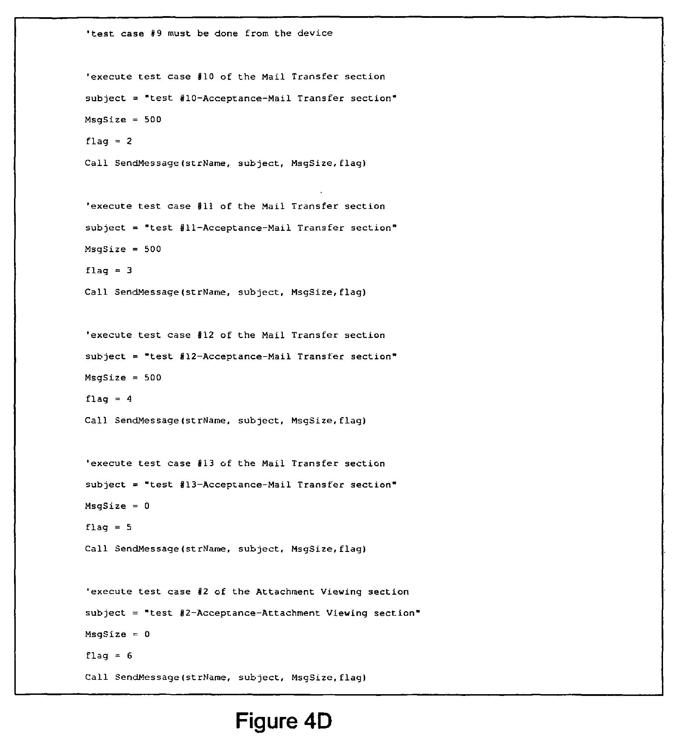

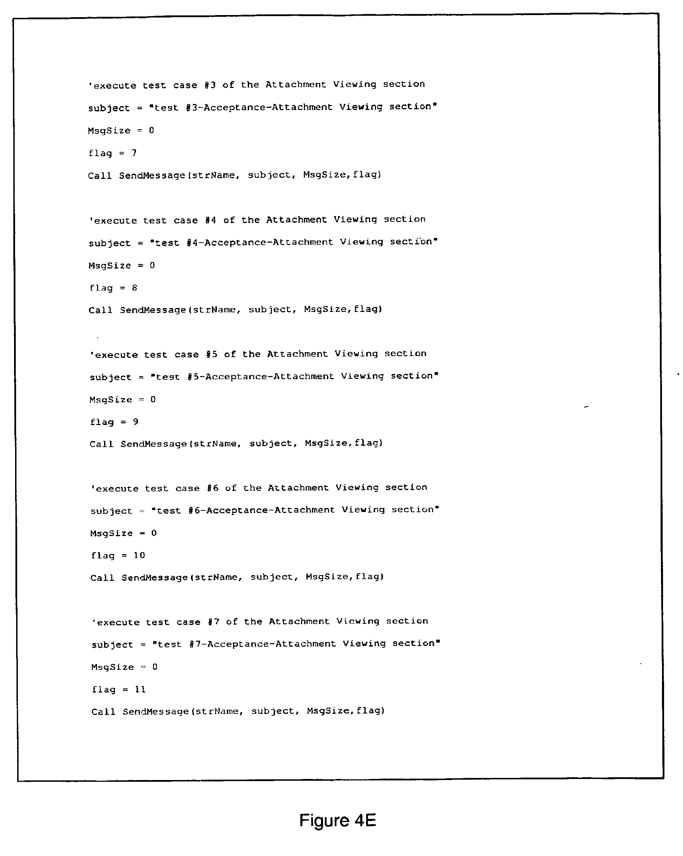

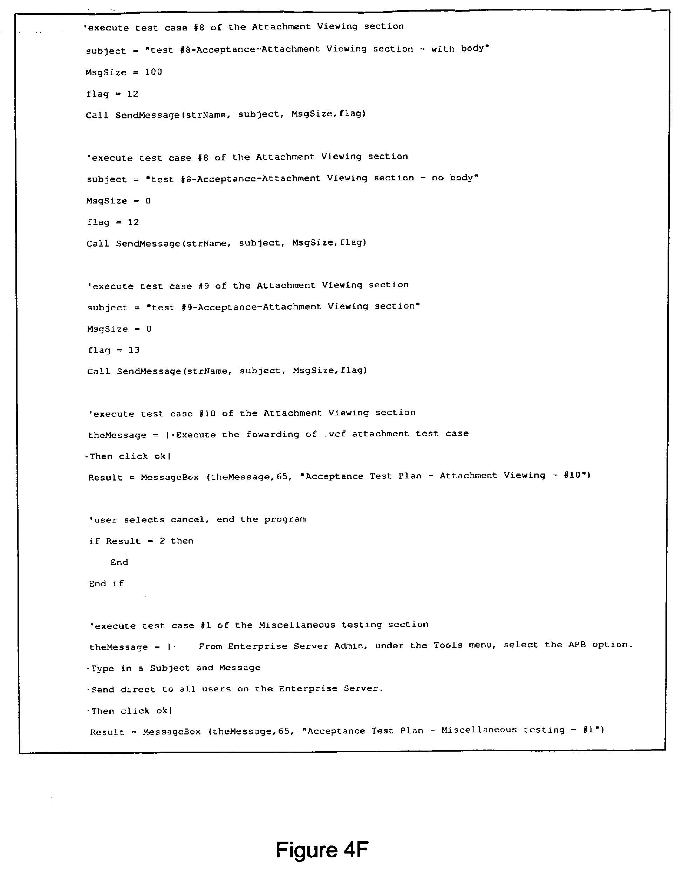

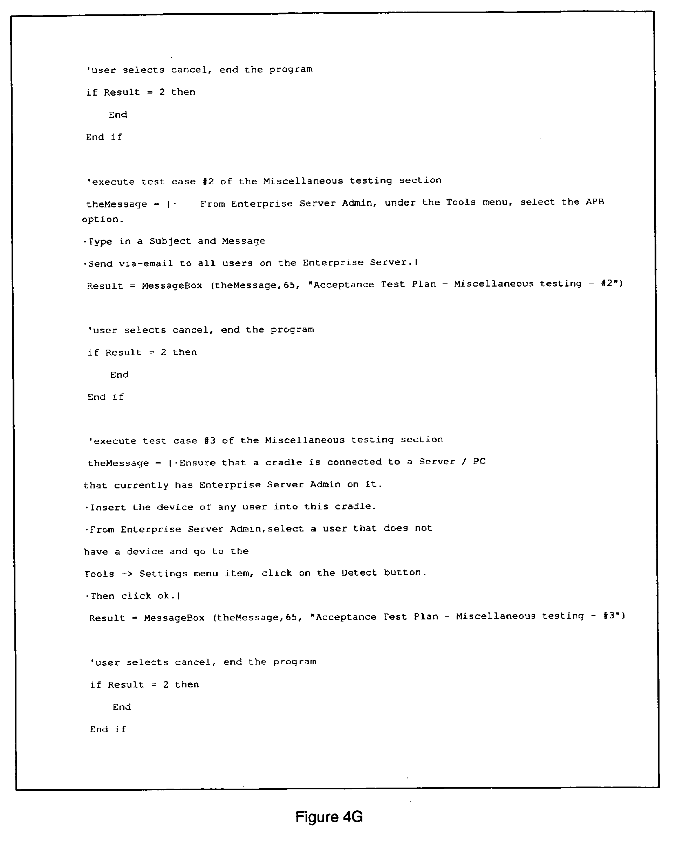

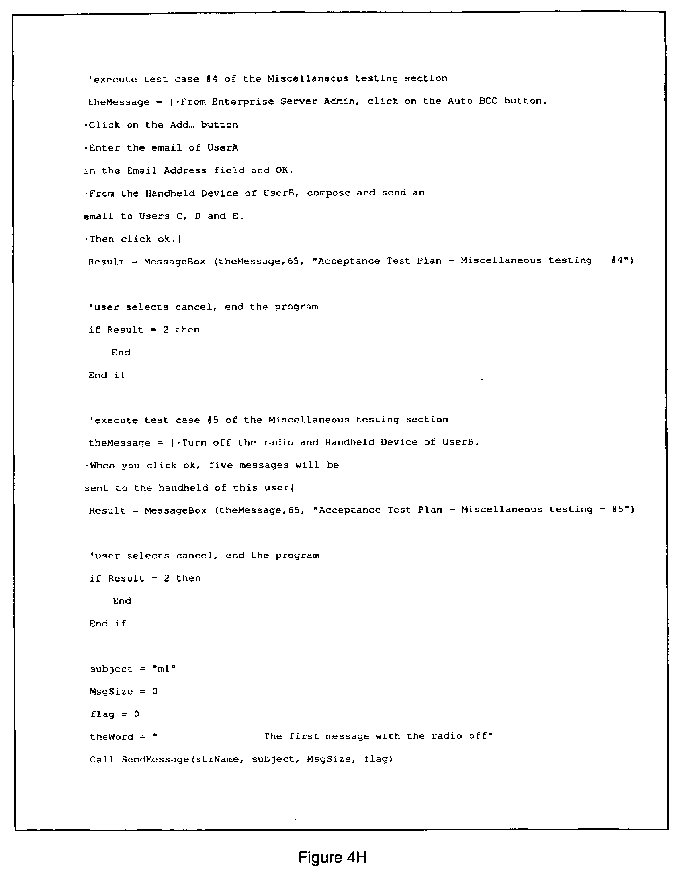

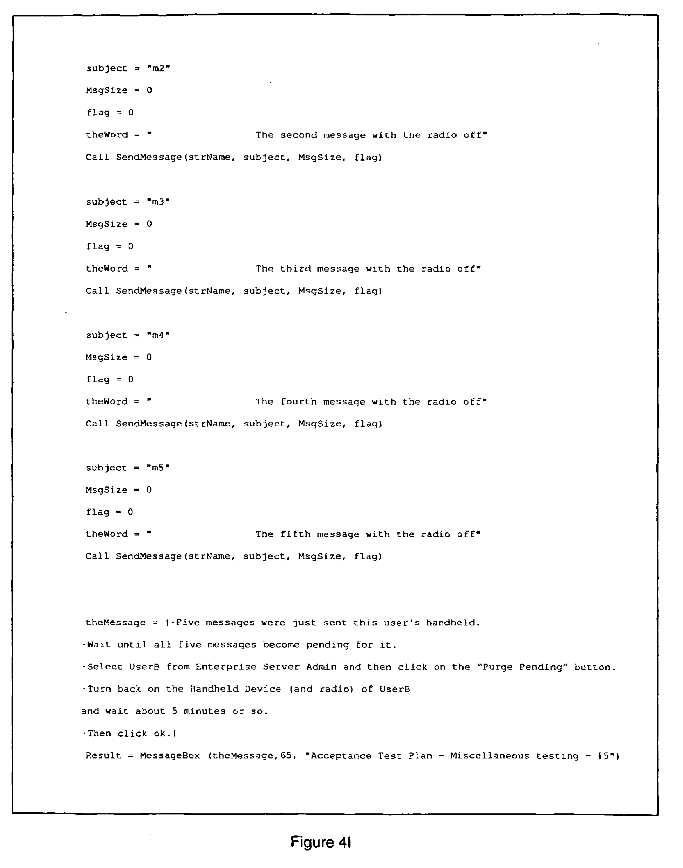

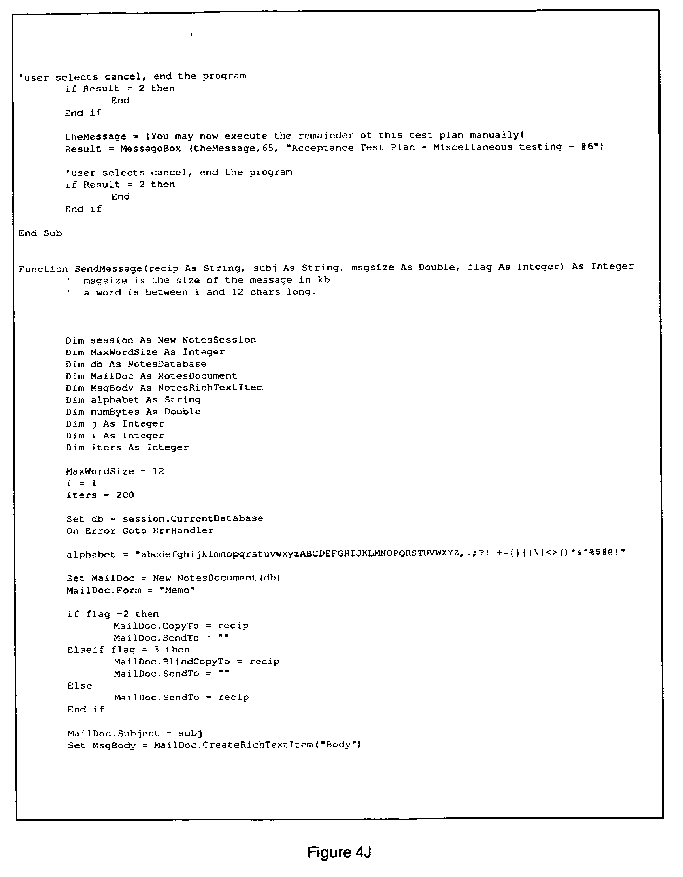

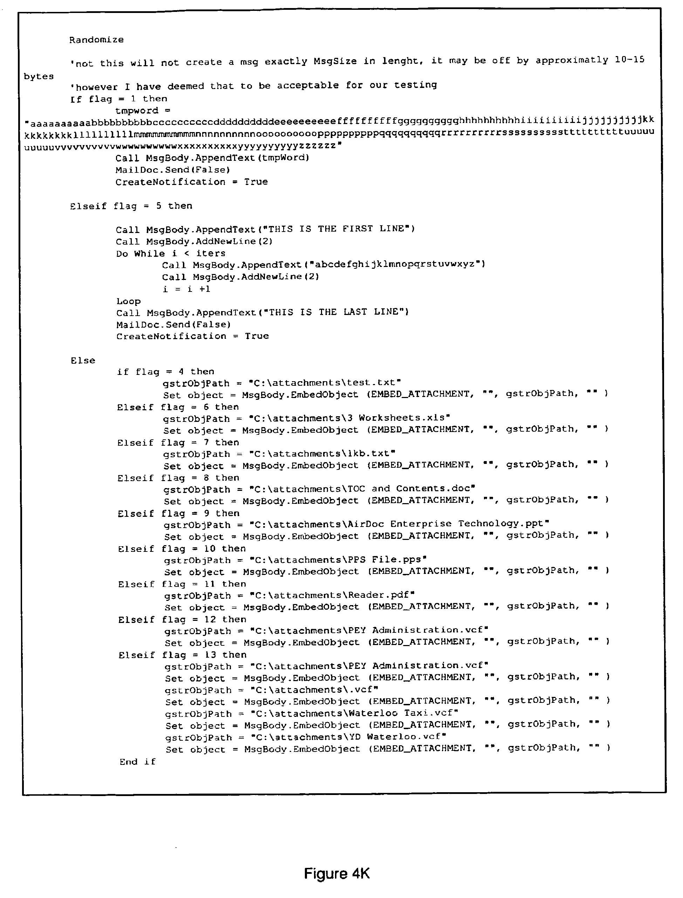

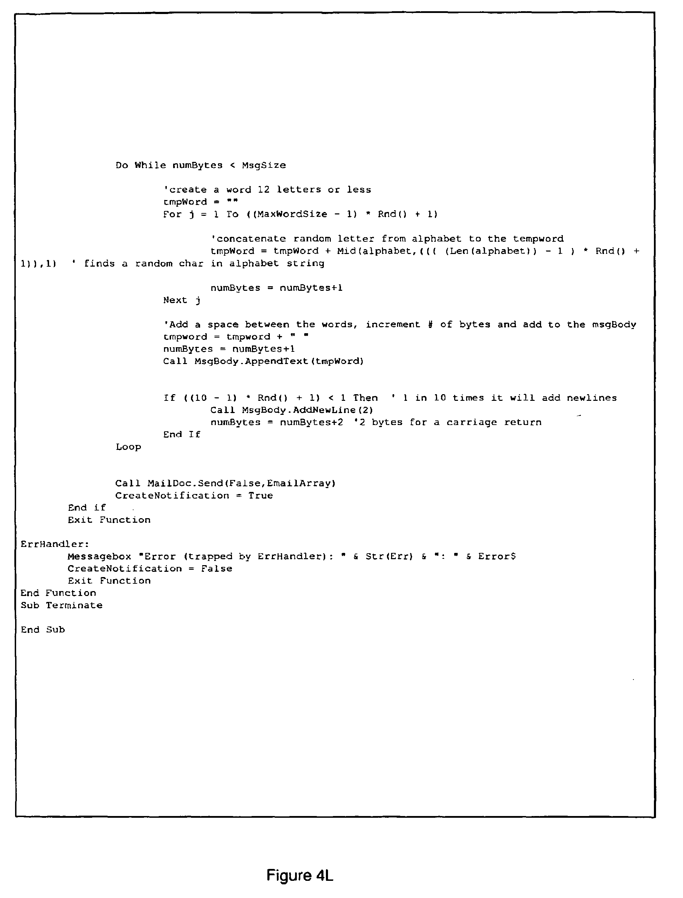

The test messages contain a variety of subject, body, and recipient combinations. Details of an exemplary script are set forth in Figure 4, from which it will be noted that test messages are sent with subject and no body; no subject and no body; large body and small subject; large body and large subject; small body and large subject; small body and small subject; subject and body including only characters; subject and body including only symbols; messages with only a cc'd user; messages with only a bcc'd user, and others. The script of the preferred embodiment is suitable for use with Lotus Notes^{®}, although a person of ordinary skill in the art will understand that scripts with similar functionality easily be written for use with other mail applications. The script also references certain attachments (.txt, .doc, vcf., .pps, .ppt, etc.) to the test email messages. Specifics of the attachments are not set forth herein, although it is within the abilities of a person of ordinary skill in the art to create such attachments.

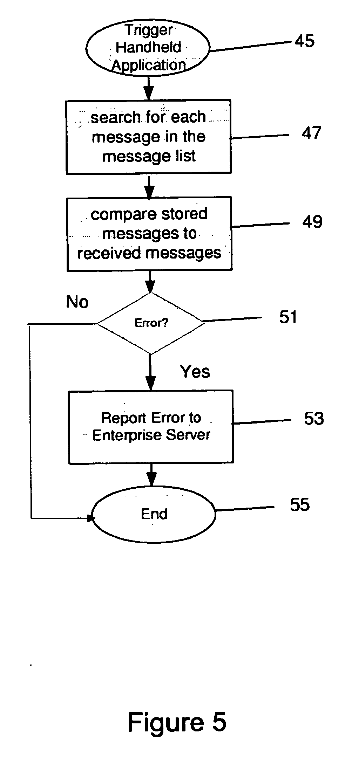

After the script has completed execution (step 41), an application within device 19 is then executed, as shown in Figure 5. The handheld application is triggered either by a message from the script indicating that all of the test messages have been sent, or manually by the administrator (step 45). The device side application searches for each message in the message list on the handheld device 19 (step 47) and compares the stored messages to the actual messages received on the handheld device 19 (step 49). If any errors detected (step 51), the errors are saved in a "badMsgs.nsf" file on the device 19, and reported to a debugging program 29 on enterprise server 1 A (step 53). The script uses the results from the handheld device application to generate the text log files ("debuglog" 25 in Figure 2). As discussed above, these log files can then be emailed to the administrators (testers or other stakeholders) from the client side script. Messages can be traced by their NoteIDs in the debuglog file.

The data specifying the stored messages on the handheld device 19 can be loaded onto the handheld device before executing the script or, in the alternative, can be sent wirelessly to the handheld device. This data is automatically generated by the script based on the database it uses to send data from (e.g. the database 21 in the embodiment of Figure 2).

The contents of the log file are presented in the following format:

Test Results Report Starting @ 06/02/2003 09:46:03 AM EDT

Result for message with NoteIDs=8F6/198E:

Message 8F6/198E appeared to be delivered successfully

Result for message with NotelDs=EBA/1992:

Message EBA/1992 appeared to be delivered successfully

Result for message with NoteIDs=EBE/1996:

Message EBE/1996 appeared to be delivered successfully

Result for message with NoteIDs=EC2/199A:

Enterprise Server potentially encountered problem when delivering message EC2/199A->EBE

Result for message with NoteIDs=EC6/199E:

Enterprise Server potentially encountered problem when delivering message EC6/199E->EC2

Result for message with NoteIDs=ECA/19A2:

Enterprise Server potentially encountered problem when delivering message ECA/19A2->EC6

Result for message with NoteIDs=ECE/19A6:

Enterprise Server potentially encountered problem when delivering message ECE/19A6->ECA.

As discussed above, each message can be identified by the NoteIDs in the three databases: msgStore.nsf, user's mail file, and badMsgs.nsf (for those test messages that resulted in errors). For example, message 8F6/198E is indicated as having been delivered successfully (where "8F6" is the NotelD of the message in the msgStore.nsf, and "198E" is the NotelD of the message in the user's mail file). On the other hand, the enterprise server encountered a problem when delivering message EC2/199A->EBE (where "EC2" is the NoteID of the message in the msgStore.nsf, "199A" is the NoteID of the message in the user's mail file, and "EBE" is the NoteID of the message in the badMsgs.nsf).

The administrator is left with the relatively simple task of reviewing the log to identify messages that caused errors and then taking appropriate corrective action on the server 1 A. Typically, the administrator then manually tests the message that caused the problem in order to investigate the source of the problem. Since the testing is fully automated by the script, the administrator can run the script overnight or at some other convenient time since there is no need to personally oversee the testing (apart from analyzing the results of the testing afterward). The process set forth herein drastically reduces the amount of time required to test messaging as compared to manual testing of the email function.

A person skilled in the art, having read this description of the preferred embodiment may conceive of variations and alternative embodiments. The process set forth herein can, for example, be modified to test specific messages that are required by a test plan. Moreover, data (other than messages) can also be retrieved and compared from other handheld applications, such as the calendar, in the same manner. For each message compared, the handheld device 19 sends results to the client side script.

The scope of the invention is defined by the claims appended hereto.

## Claims

1. A communication system having an enterprise server (1A, 1 B) for interacting with an e-mail server (2) for facilitating communications and delivery of services to mobile communication devices (19) associated with users, wherein said enterprise server (1A, 1 B) is arranged to execute an automated script associated with a mail account of a user on the e-mail server (2) for testing said communications by:
copying test messages from a database (21) to a mail file (23) of the user within the e-mail server (2); and
automatically sending a plurality of said test email messages to at least one of said mobile communication devices (19) associated with at least one user.

2. The communications system of claim 1, wherein said enterprise server (1A) is arranged to poll the user's mail file (23) within the e-mail server (2) for new messages to thereby automatically send said plurality of test messages.

3. The communication system of claim 1 or claim 2, wherein said test messages comprise a variety of subject, body, and recipient combinations.

4. The communication system of claim 3, wherein said variety of subject, body, and recipient combinations comprises at least one of a message with subject and no body, a message with no subject and no body, a message with a large body and small subject, a message with a large body and large subject, a message with a small body and large subject, a message with a small body and small subject, a message with a subject and body comprising only characters, a message with a subject and body comprising only symbols, a message with only a cc'd user, a message with only a bcc'd user, or a message with an attachment.

5. A method of testing communications in a system comprising an enterprise server (1A, 1B) interacting with an e-mail server (2) for facilitating communications and delivery of services to at least one mobile communication devices (19), the method comprising the steps at the enterprise server (1A) of
executing an automated script associated with a mail account of a user on the e-mail server (2) for testing said communications by:
copying test messages from a database (21) to a mail file (23) of the user within the e-mail server (2); and
automatically sending a plurality of said test email messages to said at least one mobile communication device (19).

6. The method of claim 5, wherein said enterprise server (1A) polls the user's mail file (23) within the e-mail server (2) for new messages to thereby automatically send said plurality of test messages.

7. The method of claim 5 or claim 6, further comprising verifying correct receipt of said test email messages.

8. The method of claim 7, wherein said verifying correct receipt comprises searching for each message stored in a message list on the mobile communication device (19), comparing each stored message to a corresponding actual message received on the mobile device (19), and reporting any discrepancy therebetween as an error.

9. The method of claim 8, wherein said reporting comprises noting said error in a debug file (25), saving the corresponding message in a bad message file (27), and reporting the error to a debugging program (29) on said enterprise server (1A, 1B).

10. An enterprise server (1A, 1B) for interacting with an e-mail server (2) for facilitating communications and delivery of services to mobile communication devices (19) associated with users in a communication system, wherein said enterprise server (1A, 1B) has an automated script installed thereon, said automated script being associated with a mail account of a user on the e-mail server (2), said automated script being configured to test said communications by copying test messages from a database (21) to a mail file (23) of the user within the e-mail server (2)and automatically sending a plurality of said test email messages to at least one of said mobile communication devices (19) associated with at least one user.

11. The enterprise server (1A) of claim 10, wherein said enterprise server (1A) is arranged to poll the user's mail file (23) within the e-mail server (2) for new messages to thereby automatically send said plurality of test messages.

12. An administration computer (7) for executing administration software for managing operation of the enterprise server of claim 10 or claim 11, wherein said administration computer is configurable to install the automated script on said enterprise server.

## Patentansprüche

1. Kommunikationssystem mit einem Enterprise-Server (1A, 1 B) zum Interagieren mit einem E-Mail-Server (2), um die Kommunikation und Lieferung von Diensten an mit Benutzern assoziierte mobile Kommunikationsgeräte (19) zu erleichtern, wobei der Enterprise-Server (1A, 1 B) dazu eingerichtet ist, ein mit einem Mail-Konto eines Benutzers auf einem E-Mail-Server (2) assoziiertes automatisiertes Script auszuführen, um die Kommunikation zu testen, indem folgende Schritte ausgeführt werden:
das Kopieren von Testnachrichten aus einer Datenbank (21) in eine Mail-Datei (23) des Benutzers innerhalb des E-Mail-Servers (2); und
das automatische Senden einer Vielzahl der Test-E-Mail-Nachrichten an mindestens eines der mit mindestens einem Benutzer assoziierten mobilen Kommunikationsgeräte (19).

2. Kommunikationssystem gemäß Anspruch 1, wobei der Enterprise-Server (1A) dazu eingerichtet ist, die Mail-Datei (23) des Benutzers innerhalb des E-Mail-Servers (2) auf neue Nachrichten abzufragen, um dadurch automatisch die Vielzahl von Testnachrichten zu senden.

3. Kommunikationssystem gemäß Anspruch 1 oder Anspruch 2, wobei die Testnachrichten eine Vielfalt von Kombinationen aus Betreff, Nachrichtenhauptteil und Empfänger umfassen.

4. Kommunikationssystem gemäß Anspruch 3, wobei die Vielfalt von Kombinationen aus Betreff, Nachrichtenhauptteil und Empfänger mindestens eine Nachricht mit Betreff und ohne Nachrichtenhauptteil, eine Nachricht ohne Betreff und ohne Nachrichtenhauptteil, eine Nachricht mit einem großen Nachrichtenhauptteil und einem kleinen Betreff, eine Nachricht mit einem großen Nachrichtenhauptteil und einem großen Betreff, eine Nachricht mit einem kleinen Nachrichtenhauptteil und einem großen Betreff, eine Nachricht mit einem Betreff und einem Hauptteil, der nur aus Zeichen besteht, eine Nachricht mit einem Betreff und einem Hauptteil, der nur aus Symbolen besteht, eine Nachricht mit lediglich einem als Cc-Empfänger aufgeführten Benutzer, eine Nachricht mit lediglich einem als Bcc-Empfänger aufgeführten Benutzer oder eine Nachricht mit einem Anhang umfasst.

5. Verfahren zum Testen der Kommunikation in einem System, umfassend einen Enterprise-Server (1A, 1B), der mit einem E-Mail-Server (2) interagiert, um die Kommunikation und Lieferung von Diensten an mindestens ein mobiles Kommunikationsgerät (19) zu erleichtern, das Verfahren umfassend die folgenden Schritte an dem Enterprise-Server (1A) das Ausführen eines mit einem Mail-Konto eines Benutzers auf dem E-Mail-Server (2) assoziiertes automatisiertes Script, um die Kommunikation zu testen durch:
das Kopieren von Testnachrichten aus einer Datenbank (21) in eine Mail-Datei (23) des Benutzers innerhalb des E-Mail-Servers (2); und
das automatische Senden einer Vielzahl der Test-E-Mail-Nachrichten an das mindestens eine mobile Kommunikationsgerät (19).

6. Verfahren gemäß Anspruch 5, wobei der Enterprise-Server (1A) die Mail-Datei (23) des Benutzers innerhalb des E-Mail-Servers (2) auf neue Nachrichten abfragt, um dadurch automatisch die Vielzahl von Testnachrichten zu senden.

7. Verfahren gemäß Anspruch 5 oder Anspruch 6, des Weiteren umfassend das Verifizieren des korrekten Empfangs der Test-E-Mail-Nachrichten.

8. Verfahren gemäß Anspruch 7, wobei das Verifizieren des korrekten Empfangs das Suchen nach jeder Nachricht umfasst, die in einer Nachrichtenliste auf dem mobilen Kommunikationsgerät (19) gespeichert ist, das Vergleichen von jeder gespeicherten Nachricht mit einer entsprechenden tatsächlichen Nachricht, die auf dem Mobilgerät (19) empfangen wurde, und das Berichten jeglicher Diskrepanz zwischen diesen als einen Fehler.

9. Verfahren gemäß Anspruch 8, wobei das Berichten das Notieren des Fehlers in einer Fehlerbeseitigungsdatei (25), das Speichern der entsprechenden Nachricht in einer Schlechte-Nachricht-Datei (27) und das Berichten des Fehlers an ein Fehlerbeseitigungsprogramm (29) auf dem Enterprise-Server (1A, 1B) umfasst.

10. Enterprise-Server (1A, 1B) zum Interagieren mit einem E-Mail-Server (2) zur Erleichterung der Kommunikation und Lieferung von Diensten an mit Benutzern in einem Kommunikationssystem assoziierte mobile Kommunikationsgeräte (19), wobei auf dem Enterprise-Server (1A, 1B) ein automatisiertes Script installiert ist, das automatisierte Script mit einem Mail-Konto eines Benutzers auf dem E-Mail-Server (2) assoziiert ist, das automatisierte Script konfiguriert ist zum Testen der Kommunikation durch das Kopieren von Testnachrichten aus einer Datenbank (2) in eine Mail-Datei (23) des Benutzers innerhalb des E-Mail-Servers (2) und durch das automatische Senden einer Vielzahl der Test-E-Mail-Nachrichten zu mindestens einem der mit mindestens einem Benutzer assoziierten mobilen Kommunikationsgeräte (19).

11. Enterprise-Server (1A) gemäß Anspruch 10, wobei der Enterprise-Server (1A) eingerichtet ist zum Abfragen der Mail-Datei (23) des Benutzers innerhalb des E-Mail-Servers (2) auf neue Nachrichten, um dadurch automatisch die Vielzahl von Testnachrichten zu senden.

12. Administrationscomputer (7) zum Ausführen von Administrationssoftware zum Verwalten des Betriebs des Enterprise-Servers gemäß Anspruch 10 oder Anspruch 11, wobei der Administrationscomputer konfigurierbar ist, um das automatisierte Script auf dem Enterprise-Server zu installieren.

## Revendications

1. Système de communication doté d'un serveur d'entreprise (1A, 1B) destiné à interagir avec un serveur de courrier électronique (2) afin de permettre des communications et la fourniture de services à des dispositifs de communication mobile (19) associés à des utilisateurs, ledit serveur d'entreprise (1A, 1B) étant agencé pour exécuter un script automatisé associé à un compte de courrier électronique d'un utilisateur sur le serveur de courrier électronique (2) afin de tester lesdites communications :
en copiant des messages de test d'une base de données (21) à un fichier de courrier (23) de l'utilisateur à l'intérieur du serveur de courrier électronique (2) ; et
en envoyant automatiquement une pluralité desdits messages de courrier électronique de test à au moins un desdits dispositifs de communication mobile (19) associés à au moins un utilisateur.

2. Système de communication de la revendication 1 dans lequel ledit serveur d'entreprise (1A) est agencé de manière à relever de nouveaux messages dans le fichier de courrier (23) de l'utilisateur à l'intérieur du serveur de courrier électronique (2) afin d'envoyer automatiquement ladite pluralité de messages de test.

3. Système de communication de la revendication 1 ou 2 dans lequel lesdits messages de test comprennent une variété de combinaisons de sujet, corps et destinataire.

4. Système de communication de la revendication 3 dans lequel la variété de combinaisons de sujet, corps et destinataire comprend au moins un des éléments suivants :
un message avec un sujet mais sans corps, un message sans sujet ni corps, un message avec un corps long et un petit sujet, un message avec un corps long et un sujet long, un message avec un petit corps et un sujet long, un message avec un petit corps et un petit sujet, un message avec un sujet et un corps constitués uniquement de caractères, un message avec un sujet et un corps constitués uniquement de symboles, un message avec un utilisateur en « Copie à » uniquement, un message avec un utilisateur en « Copie cachée » uniquement, ou un message avec une pièce-jointe.

5. Procédé pour tester des communications dans un système comprenant un serveur d'entreprise (1A, 1B) interagissant avec un serveur de courrier électronique (2) destiné à permettre des communications et la fourniture de services à au moins un dispositif de communication mobile (19), le procédé comprenant les étapes au niveau du serveur d'entreprise (1A) consistant à :
exécuter un script automatisé associé à un compte de courrier électronique d'un utilisateur sur le serveur de courrier électronique (2) afin de tester lesdites communications :
en copiant des messages de test d'une base de données (21) à un fichier de courrier (23) de l'utilisateur à l'intérieur du serveur de courrier électronique (2) ; et
en envoyant automatiquement une pluralité desdits messages de courrier électronique au(x) dit(s) dispositif(s) de communication mobile (19).

6. Procédé de la revendication 5 dans lequel ledit serveur d'entreprise (1A) relève de nouveaux messages dans le fichier de courrier (23) de l'utilisateur à l'intérieur du serveur de courrier électronique (2) afin d'envoyer automatiquement ladite pluralité de messages de test.

7. Procédé de la revendication 5 ou 6 comprenant en outre un contrôle de réception correcte desdits messages de courrier électronique.

8. Procédé de la revendication 7 dans lequel ladite vérification de réception correcte comprend une recherche de chaque message stocké dans une liste de messages sur le dispositif de communication mobile (19), la comparaison de chaque message stocké à un message réel correspondant reçu sur le dispositif mobile (19), et un signalement, sous la forme d'une erreur, des éventuelles disparités entre eux.

9. Procédé de la revendication 8 dans lequel ladite fonction de signalement comprend la consignation de ladite erreur dans un fichier de débogage (25), l'enregistrement du message correspondant dans un fichier « mauvais message » (27), et le signalement de l'erreur à un programme de débogage (29) sur ledit serveur d'entreprise (1A, 1B).

10. Serveur d'entreprise (1A, 1B) destiné à interagir avec un serveur de courrier électronique (2) afin de permettre des communications et la fourniture de services à des dispositifs de communication mobile (19) associés à des utilisateurs dans un système de communication, un script automatisé étant installé sur ledit serveur d'entreprise (1A, 1B), ledit script automatisé étant associé à un compte de courrier électronique d'un utilisateur sur le serveur de courrier électronique (2) ledit script automatisé étant configuré pour tester lesdites communications en copiant des messages de courrier électronique de test d'une base de données (21) à un fichier de courrier (23) de l'utilisateur à l'intérieur du serveur de courrier électronique (2) et en envoyant automatiquement une pluralité desdits messages de courrier électronique test au(x) dit(s) dispositif(s) de communication mobile (19) associé(s) à au moins un utilisateur.

11. Serveur d'entreprise (1A) de la revendication 10 qui est agencé pour relever de nouveaux messages dans le fichier de courrier (23) de l'utilisateur à l'intérieur du serveur de courrier électronique (2) afin d'envoyer automatiquement ladite pluralité de messages de test.

12. Ordinateur d'administration (7) destiné à exécuter des logiciels administratifs dans le but de gérer le fonctionnement du serveur d'entreprise de la revendication 10 ou 11, ledit ordinateur d'administration pouvant être configuré pour installer le script automatisé sur ledit serveur d'entreprise.
